# EUROPÄISCHE PATENTSCHRIFT

(11) **EP 1 322 680 B1**
(45) Veröffentlichungstag und Bekanntmachung des Hinweises auf die Patenterteilung: **26.07.2006**
(21) Anmeldenummer: 01980451.7
(22) Anmeldetag: 28.09.2001
(51) Int. Cl.: C08F 10/02, C07F 17/00

(54) **VERFAHREN ZUR HERSTELLUNG VON HOCHVERZWEIGTEN ETHYLENPOLYMERISATEN**
METHOD FOR PRODUCING HIGHLY BRANCHED ETHYLENE POLYMERS
PROCEDE POUR PRODUIRE DES POLYMERES D'ETHYLENE FORTEMENT RAMIFIES

(30) Priorität: 28.09.2000 DE 10049276
(43) Veröffentlichungstag der Anmeldung: 02.07.2003
(73) Patentinhaber: Basell Polyolefine GmbH, 50389 Wesseling (DE)
(72) Erfinder: MIHAN, Shahram, 67061 Ludwigshafen (DE); LILGE, Dieter, 67117 Limburgerhof (DE); GÖHRE, Jan, 49477 Ibbenbüren (DE)
(86) Internationale Anmeldenummer: PCT/EP2001/011239
(87) Internationale Veröffentlichungsnummer: WO 2002/031001

(56) Entgegenhaltungen:
- WO-A-01/02323
- WO-A-01/12641
- DE-A- 19 710 615
- DE-A- 19 960 123
- DOHRING, A. ET AL: "Phosphinoalkyl-substituted cyclopentadienyl chromium catalysts for the oligomerization of ethylene" ORGANOMET.CATAL.OLEFIN POLYM., 2001, Seiten 127-136, XP001055830
- DOHRING, ARNO ET AL: "Steric control of the chromium-catalyzed oligomerization of ethylene" MACROMOL.SYMP.(2001),CONFERENCE ON INSERTION POLYMERIZATION, Nr. 173, Seiten 117-121, XP001055832
- DOEHRING, ARNO ET AL: "Donor-Ligand-Substituted Cyclopentadienylchromium(III) Complexes: A New Class of Alkene Polymerization Catalyst. 2. Phosphinoalkyl- Substituted Systems" ORGANOMETALLICS, Bd. 20, Nr. 11, 2001, Seiten 2234-2245, XP001055500

## Beschreibung

Die vorliegende Erfindung betrifft ein Verfahren zur Herstellung von hochverzweigten Ethylenpolymerisaten, dadurch gekennzeichnet, dass man Ethylen mit einem Katalysatorsystem polymerisiert, das eine Verbindung der Formel I a oder I b 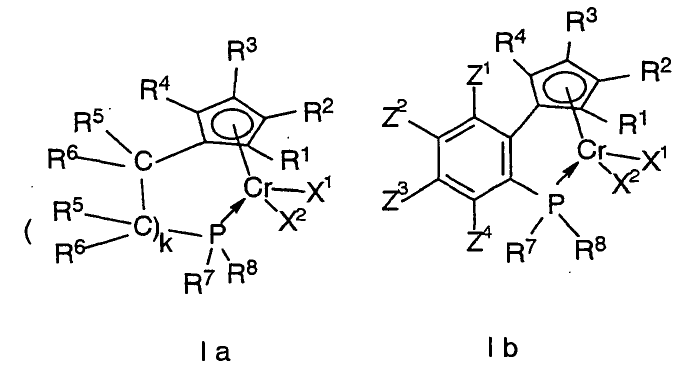 und einen Aktivator enthält, wobei wobei die Variablen in den Formeln I a und I b wie folgt definiert sind::
- X¹,X²: sind gleich oder verschieden und ausgewählt aus Halogenid,Trifluoracetat, BF₄-, PF₆- oder SbF₆-, C₁-C₈-Alkyl, C₇- bis C₁₃-Aralkyl, C₆-C₁₄-Aryl, C₁-C₆-Alkoxy oder NR⁹R¹⁰, wobei R⁹ und R¹⁰ unabhängig voneinander aus Wasserstoff, C₁-C₈-Alkyl, C₂-C₁₂-Alkenyl und C₆-C₁₄-Aryl ausgewählt sind, die einen gesättigten oder ungesättigten 5- bis 10-gliedrigen Ring bilden können;
- R¹ bis R⁶: sind gleich oder verschieden und ausgewählt aus Wasserstoff, C₁-C₈-Alkyl, substituiert oder unsubstituiert, C₃-C₁₂-Cycloalkyl, substituiert oder unsubstituiert, C₂-C₁₂-Alkenyl, C₇-C₁₃-Aralkyl, C₆-C₁₄-Aryl, unsubstituiert oder einfach oder mehrfach gleich oder verschieden substituiert mit
C₁-C₈-Alkyl, substituiert oder unsubstituiert, C₃-C₁₂-Cycloalkyl, C₇-C₁₃-Aralkyl, C₆-C₁₄-Aryl, Halogen, C₁-C₆-Alkoxy, C₆-C₁₄-Aryloxy, SiR¹¹R¹²R¹³ oder O-SiR¹¹R¹²R¹³, wobei R¹¹ bis R¹³ ausgewählt werden aus C₁-C₈-Alkyl, C₃-C₁₂-Cycloalkyl, C₇-C₁₃-Aralkyl oder C₆-C₁₄-Aryl;
- k: 0,1,2 oder 3,
- Z¹ bis Z⁴: sind gleich oder verschieden und ausgewählt aus Wasserstoff, C₁-C₈-Alkyl, substituiert oder unsubstituiert, C₃-C₁₂-Cycloalkyl, substituiert oder unsubstituiert, C₂-C₁₂-Alkenyl, Halogen, NO₂ C₇-C₁₃-Aralkyl oder C₆-C₁₄-Aryl,
- R⁷,R⁸: sind gleich oder verschieden und ausgewählt aus verzweigtes C₃-C₈-Alkyl, C₃-C₁₂-Cycloalkyl, α-substituiertes C₃-C₁₂-Alkenyl,
und wobei das Verfahren bei einer Temperatur von 40 bis 110°C und einem Druck von 10 bis 100 bar durchgeführt wird.

Polyolefine wie beispielsweise Polyethylen und Polypropylen sowie Copolymere von Ethylen oder Propylen mit anderen Olefinen sind als Werkstoffe von überragender technischer und wirtschaftlicher Bedeutung, weil sie ein breites Anwendungsspektrum aufweisen und die Monomere in großen Mengen günstig erhältlich sind. Dabei wird die Eignung als Werkstoff durch die Struktur der Makromoleküle und Parameter wie beispielsweise Molekulargewicht, Molekulargewichtsverteilung, Verzweigungsgrad, Verteilung der Verzweigungen oder Menge und Homogenität des Einbaus von Comonomeren bestimmt. Besonderen Einfluss auf die Struktur des Polymers hat dabei das Polymerisationsverfahren und dabei insbesondere der verwendete Katalysator.

Durch Ziegler-Natta-Katalysatoren erhält man in der Regel Polyethylene oder Polypropylene mit einer breiten Molekulargewichtsverteilung und einem nicht homogenen Comonomereinbau, d.h. längere Polymerketten enthalten wenig Comonomer als kürzere Ketten. Für Verzweigungen gilt analog, dass die längeren Ketten in der Regel weniger Verzweigungsstellen aufweisen als die kürzeren. Ziegler-Natta-Katalysatoren-lassen sich mit Wasserstoff regeln, d.h. das mittlere Molekulargewicht nimmt in der Regel ab.

Phillips-Katalysatoren erzeugen in der Regel ein sehr breit verteiltes Polyethylen. Eine gute Wasserstoff-Regelbarkeit wird in der Regel nicht beobachtet.

Mit Hilfe von Metallocen-Katalysatoren lassen sich Polyethylene mit enger Molekulargewichtsverteilung und homogenem Comonomereinbau herstellen. Auch Metallocene lassen sich mit Wasserstoff regeln (EP-A 0 321 851). Die Zahl der Verzweigungen ist aber für einige Anwendungen noch zu gering. Zudem muss man um die Verzweigungen zu erhalten Comonomere zugeben.

In WO 96/23010 und in L.K. Johnson *et al., J. Am. Chem. Soc.* 1995, *117*, 6414 werden Ni- und Pd-Komplexe beschrieben, mit denen sich nach Aktivierung mit Methylaluminoxan Ethylen zu hochverzweigten Ethylenpolymerisaten polymerisieren lässt. Die Aktivität der vorgeschlagenen Pd-Komplexe ist jedoch für technische Verfahren vielfach unbefriedigend, außerdem sind Pd-Verbindungen teuer. Die offenbarten Ni-Systeme führen zu Ni-Spuren im Produkt, was toxikologische Bedenken hervorruft.

In DE-A 199 10 615 werden Cr-Komplexe der allgemeinen Formel A beschrieben, 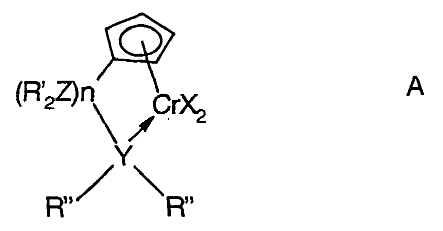 wobei beispielsweise X Halogenid oder Amid oder Alkyl sein kann, Y ein Donoratom der 15. Gruppe des Periodensystems der Elemente bedeutet und R' und R" H, Alkyl oder Organylgruppen sind und n eine ganze Zahl = 1 ist. Diese Komplexe sind in der Lage, nach Umsetzung mit Aktivatoren wie beispielsweise Methylaluminoxan Ethylen zu hochlinearen Ethylenpolymerisaten zu polymerisieren, die aber wegen ihrer Sprödigkeit für zahlreiche technische Anwendungen nachteilig sind. Die Autoren stellen während der Polymerisation ein Temperaturprofil ein, d.h. zwischen Anfangstemperatur der Polymerisation und Temperatur bei Versuchsabbruch wird ein Temperaturanstieg von 8°C oder mehr beobachtet (Beispiele 8 bis 12). In Beispiel 13 wird zwar unter nahezu isothermen Bedingungen polymerisiert, jedoch ist die Aktivität des offenbarten Katalysatorsystems mit 328 kg Polyethylen/mol Cr·h für technische Anwendungen unbefriedigend.

In DE-A 100 29 327 werden Masterbatche und ein Verfahren zur Herstellung von Polyolefinwachsen zur Herstellung von Masterbatches offenbart, wobei die Wachse mit Hilfe von Katalysatoren auf Basis von Komplexen der Gruppen 5 bis 8 des Periodensystems der Elemente hergestellt werden. Die hergestellten Masterbatches lassen sich in ihren Anwendungseigenschaften jedoch noch verbessern.

Besonders attraktiv für zahlreiche Anwendungen, beispielsweise als Wachskomponente in Pigmentkonzentraten, sogenannten "Masterbatches", sind jedoch Verfahren zur Polymerisation und Copolymerisation von Ethylen zu hochmolekularen hochverzweigten Polymerisaten, Dabei werden unter hochverzweigten Ethylenpolymerisaten solche Polymerisate verstanden, die mehr als 5 Methylgruppen pro 1000 C-Atomen aufweisen, bestimmt durch IR-Spektroskopie.

Zahlreiche Pigmente werden in der Form eines Pigmentkonzentrats vermarktet, da dies die Verarbeitung beim Einfärben von Kunststoffen erleichtert. Diese Formulierungen enthalten im Allgemeinen neben dem Pigment ein Dispergiermittel, beispielsweise ein Wachs, sowie optional einen thermoplastischen Kunststoff, meistens ein Polyolefin. Der thermoplastische Kunststoff wird auch als Trägerpolymer bezeichnet. Das Wachs dient dazu, das Pigment in der Formulierung fein zu verteilen und in dieser Verteilung zu stabilisieren. Eine marktübliche Formulierung eines derartigen Pigmentkonzentrats ("Masterbatch") enthält 25 Gew.-% Pigment, 10 Gew.-% Wachs und 65 Gew.-% eines Polyethylenkunststoffes. Als Wachs wird häufig ein Polyethylenwachs verwendet, dass sich beispielsweise durch radikalische Polymerisation oder Ziegler-Natta-Katalyse erhalten lässt. Das Polyethylenwachs kann beispielsweise durch Oxidation polar modifiziert werden. Die Verhältnisse der Einzelkomponenten können durchaus in gewissen Grenzen variiert werden.

Entscheidende Voraussetzung für die Anwendbarkeit eines derartigen Pigmentkonzentrats ist die richtige Auswahl der Wachskomponente. Obwohl selbst nicht farbig, beeinflusst sie die Brillanz des Pigmentkonzentrats. Für genauere Angaben vgl. beispielsweise die Produktbroschüre "Luwax® - Anwendung in Pigmentkonzentraten" über Polyethylenwachse der BASF AG.

Die Pigment-Agglomerate müssen gut durch das Wachs benetzt werden, damit ein Zusammenklumpen der Agglomerate verhindert wird. Eine kleine Anzahl größerer Pigment-Agglomerate trägt weniger zur Farbwirkung des betreffenden Pigments bei als eine größere Anzahl kleinerer Pigment-Agglomerate.

Es ist also eine Aufgabe, während des Formulierungsprozesses keine großen Pigment-Agglomerate entstehen zu lassen. Weiterhin ist es wünschenswert, eventuell vorher gebildete agglomerierte Pigmente zu separieren und in die sogenannten Primärpartikel aufzuspalten. Schließlich sollen die Primärpartikel auch nach dem Formulierungsprozess separiert bleiben und beim Abkühlen nicht wieder aggregieren.

Dazu werden mehrere Anforderungen an das Wachs gestellt. Eine dieser Anforderungen betrifft die Viskosität der Schmelze. Die Viskosität der Schmelze sollte möglichst niedrig sein, damit während der Formulierung, die üblicherweise durch Mischen bei einer Temperatur oberhalb der Schmelztemperatur des Wachses erfolgt, das aufgeschmolzene Wachs gut durch die Hohlräume innerhalb der Agglomerate des Pigments penetrieren kann. Durch die so ausgeübten Scherkräfte erfolgt ein leichteres Aufspalten der Agglomerate in die Primärpartikel.

Auch die Benetzungsfähigkeit der Wachse sollte gut sein.

Es hat sich nun gezeigt, dass viele Pigmentkonzentrate für hochwertige Anwendungen eine ungenügende Brillanz aufweisen. Die Lösung dieses Problems kann nur begrenzt durch einen größeren Anteil an Pigment gelingen. Für den Herstellungspreis eines Pigmentkonzentrats spielt der Preis des Pigments die entscheidende Rolle. Deshalb würde ein höherer Anteil an Pigment wirtschaftlich nachteilig sein.

Umgekehrt kann es auch wünschenswert sein, für weniger hochwertige Anwendungen ein äquivalentes Pigmentkonzentrat bereitzustellen, welches geringere Anteile des teuren Pigments aufweist.

Schließlich hat sich gezeigt, dass bei hohen Pigmentkonzentrationen die Brillanz der Masterbatche nicht mehr wesentlich steigt, was auf eine nicht mehr einwandfreie Dispergierqualität zurück zu führen ist. Schlecht dispergierte Agglomerate lassen sich beispielsweise mikroskopisch nachweisen.

Es ist also wünschenswert, Wachse für Pigmentkonzentrate zur Verfügung zu haben, die besonders gut dispergierbar sind und eine besonders gute Benetzbarkeit aufweisen. Dazu sollten solche Wachse gut geeignet sein, die eine möglichst einheitliche Struktur aufweisen.

Polymere und Copolymere mit einheitlicher Struktur sind aus Olefinen durch Katalyse mit Single-Site-Katalysatoren zugänglich. Aus EP-A 0 602 509 ist bekannt, dass sich Wachse erhalten lassen, indem man Metallocene mit Hilfe eines Cokatalysators aktiviert und in Gegenwart von Wasserstoff mit Olefinen umsetzt. Verwendungsbeispiele werden nicht aufgeführt.

Speziell ist aus EP-A 0 890 584 die Verwendung von Metallocen-Polypropylenwachsen mit einem Isotaktizitätsindex größer als 70% für Masterbatches bekannt. Nachteilig an der Verwendung eines Metallocens ist jedoch, dass zur Herstellung von isotaktischem Polypropylen spezielle racemische Isomere der Metallocene notwendig sind. Das bei den üblichen Synthesen anfallende meso-Isomer muss erst abgetrennt und danach entweder verworfen oder aber in einem weiteren Schritt in das gewünschte Racemat überführt werden.

Aus der DE-A 100 09 114 sind Polyethylenwachse mit breiter Molekulargewichtsverteilung bekannt, die durch Katalyse mit Chromocen CP₂Cr hergestellt werden können. Sie sind für Anwendungen in Masterbatches geeignet. Weiterhin sind Polyethylenwachse aus der PCT/EP/01/06689 bekannt.

Es bestand daher die Aufgabe, ein Verfahren bereitzustellen, mit dem sich
- hochverzweigte Ethylenpolymerisate aus Ethylenmonomeren herstellen lassen,
- ein für dieses Verfahren geeignetes Katalysatorsystem bereitzustellen,
- die so erhältlichen Ethylenpolymerisate in Masterbatches zu verwenden, mit denen sich Kunststoffformkörper und Kunststoffflächengebilde einfärben lassen, die eine - verglichen mit dem Stand der Technik - verbesserte Brillanz aufweisen, ohne dass der Prozentsatz an Pigment erhöht werden muss,
- ein Verfahren zur Herstellung dieser Konzentrate bereitzustellen,
- Kunststoffformkörper und Kunststoffflächengebilde herzustellen, die mit den erfindungsgemäßen Pigmentkonzentraten eingefärbt sind, und
- ein Verfahren zum Einfärben von thermoplastischen Kunststoffen und Formkörpern mit den erfindungsgemäßen Konzentraten zu finden.

Überraschend wurde gefunden, dass das eingangs definierte Verfahren diese Aufgaben löst. Dabei sind die Variablen in den Formeln I a und I b wie folgt definiert:
X¹, X² ausgewählt aus
   - Halogen wie Fluor, Chlor, Brom oder Jod, wobei Chlor und Brom besonders bevorzugt sind;
   - Trifluoracetat,
   - BF₄-, PF₆- oder SbF₆-,
   - C₁-C₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl und n-Butyl;
   - C₇- bis C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
   - C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl;
   - C₁-C₆-Alkoxy, wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy oder
   - NR⁹R¹⁰, wobei R⁹ und R¹⁰ unabhängig voneinander aus Wasserstoff, C₁-C₈-Alkyl, C₂-C₁₂-Alkenyl und C₆-C₁₄-Aryl ausgewählt sind, die einen gesättigten oder ungesättigten 5- bis 10-gliedrigen Ring bilden können; bevorzugt sind die Dimethylamino-, die Diethylamino-, die Diisopropylamino-, die Methylphenylaminogruppe und die Diphenylaminogruppe. Beispiele für Aminogruppen mit gesättigten Ringen sind die N-Piperidylgruppe und die N-Pyrrolidinylgruppe; Beispiele für Aminogruppen mit ungesättigten Ringen sind die N-Pyrrylgruppe, die N-Indolylgruppe und die N-Carbazolylgruppe;

Bevorzugt sind X¹ und X² gleich, besonders bevorzugt sind X¹ und X² Halogen oder BF₄- und ganz besonders bevorzugt sind X¹ und X² Chlor oder Brom.

R¹ bis R⁶ sind unabhängig voneinander
- Wasserstoff,
- C₁-C₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl und n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₈-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹¹R¹²R¹³, wobei R¹¹ bis R¹³ unabhängig voneinander aus Wasserstoff, C₁-C₁₂-Alkyl, C₇-C₁₃-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-paraxylylsilylgruppe; besonders bevorzugt sind die Trimethylsilylgruppe und die tert.-Butyldimethylsilylgruppe;
- Siloxy OSiR¹¹R¹²R¹³, wobei R¹¹ bis R¹³ unabhängig voneinander aus Wasserstoff, C₁-C₁₂-Alkyl, C₇-C₁₃-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₆-Alkoxy, wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₁₂-Alkyl, C₁-C₁₂-Alkenyl, C₃-C₁₂-Cycloalkyl, C₆-C₁₄-Aryl, Silyl SiR¹¹R¹²R¹³, Siloxy OSiR¹¹R¹²R¹³ oder C₁-C₆-Alkoxy, wobei diese Gruppen wie oben spezifiziert sind;

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I a oder I b R³ und R⁴ zusammen sein:
-(CH₂)₃- (Trimethylen), -(CH₂)₄- (Tetramethylen), -(CH₂)₅- (Pentamethylen), -(CH₂)₆- (Hexamethylen),
-CH₂-CH=CH-, -CH₂-CH=CH-CH₂-, -CH=CH-CH=CH-, -O-CH₂-O-, -O-CH(CH₃)-O-,
-O-CH-(C₆H₅)-O-, -O-CH₂-CH₂-O-; -O-C(CH₃)₂-O-, -NCH₃-CH₂-CH₂-NCH₃-, -NCH₃-CH₂-NCH₃- oder -O-Si(CH₃)₂-O-.

In Formel I b sind Z¹ bis Z⁴ gleich oder verschieden und gewählt aus
- Wasserstoff,
- Halogen wie Fluor, Chlor, Brom oder Jod, wobei Chlor und Brom bevorzugt sind;
- C₁-C₈-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl oder n-Octyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl,
- ein- oder mehrfach mit Donoratomen substituiertes C₁-C₈-Alkyl, z.B. nicht-cyclische oder cyclische Ether, Alkohole, Ketale, Thioether oder Amine; beispielsweise Methoxymethyl, Ethoxymethyl, Ethoxyethyl, β-Hydroxyethyl, ω-Ethoxypropyl, (2-Ethylhexyloxy)-propyliden, Methoxyethoxypropyliden oder ω-Dimethylaminopropyl;
- ein- oder mehrfach halogenierte C₁-C₈-Alkylgruppen wie Fluormethyl, Difluormethyl, Trifluormethyl, Chlormethyl, Dichlormethyl, Trichlormethyl, Brommethyl, Dibrommethyl, Tribrommethyl, Pentafluorethyl, Perfluorpropyl und Perfluorbutyl, besonders bevorzugt sind Fluormethyl, Difluormethyl, Trifluormethyl und Perfluorbutyl;
- C₂-C₁₂-Alkenyl, bevorzugt C₂- bis ω-C₈-Alkenyl wie Vinyl, Allyl, But-3-en-1-yl, ω-Pentenyl, ω-Hexenyl, ω-Heptenyl, und ω-Octenyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- NO₂,
- C₇- bis C₁₃-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl,
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl,
- Silyl SiR¹¹R¹²R¹³, wobei R¹¹ bis R¹³ unabhängig voneinander aus Wasserstoff, C₁-C₈-Alkyl, C₇-C₁₃-Aralkyl und C₆-C₁₄-Aryl ausgewählt sind; bevorzugt sind die Trimethylsilyl-, Triethylsilyl-, Triisopropylsilyl-, Diethylisopropylsilyl-, Dimethylthexylsilyl-, tert.-Butyldimethylsilyl-, tert.-Butyldiphenylsilyl-, Tribenzylsilyl-, Triphenylsilyl- und die Tri-paraxylylsilylgruppe; besonders bevorzugt sind die Trimethylsilylgruppe und die tert.-Butyldimethylsilylgruppe;
- Siloxy OSiR¹¹R¹²R¹³, wobei R¹¹ bis R¹³ unabhängig voneinander aus Wasserstoff, C₁-C₈-Alkyl, C₇-C₁₃-Aralkyl und C₆-C₁₄-Aryl ausgewählt sind; bevorzugt sind die Trimethylsilyloxy-, Triethylsilyloxy-, Triisopropylsilyloxy-, Diethylisopropylsilyloxy-, Dimethylthexylsilyloxy-, tert.-Butyldimethylsilyloxy-, tert.-Butyldiphenylsilyloxy-, Tribenzylsilyloxy-, Triphenylsilyloxy- und die Tri-para-xylylsilyloxygruppe; besonders bevorzugt sind die Trimethylsilyloxygruppe und die tert.-Butyldimethylsilyloxygruppe;
- C₁-C₆-Alkoxy, bevorzugt C₁-C₆-Alkoxy wie Methoxy, Ethoxy, n-Propoxy, iso-Propoxy, n-Butoxy, iso-Butoxy, sec.-Butoxy, tert.-Butoxy, n-Pentoxy, iso-Pentoxy, n-Hexoxy und iso-Hexoxy, besonders bevorzugt Methoxy, Ethoxy, n-Propoxy und n-Butoxy;
- C₆-C₁₄-Aryl, das seinerseits substituiert ist mit einem oder mehreren C₁-C₈-Alkyl, C₁-C₁₂-Alkenyl, C₃-C₁₂-Cycloalkyl, C₆-C₁₄-Aryl, Silyl SiR¹¹R¹²R¹³, Siloxy OSiR¹¹R¹²R¹³ oder C₁-C₆-Alkoxy, wobei diese Gruppen wie oben spezifiziert sind;

In einer besonderen Ausführungsform der vorliegenden Erfindung können zwei benachbarte Reste miteinander unter Einbeziehung des Stammaromaten einen 5- bis 10-gliedrigen Ring bilden. So können beispielsweise in Formel I b R³ und R⁴ oder Z¹ und Z² zusammen sein:
-(CH₂)₃- (Trimethylen), -(CH₂)₄- (Tetramethylen), -(CH₂)₅- (Pentamethylen), -(CH₂)₆- (Hexamethylen), -CH₂-CH=CH-, -CH₂-CH=CH-CH₂-, -CH=CH-CH=CH-, -O-CH₂-O-,
-O-CH(CH₃)-O-, -O-CH-(C₆H₅)-O-, -O-CH₂-CH₂-O-, -O-C(CH₃)₂-O-, -NCH₃-CH₂-CH₂-NCH₃-,
-NCH₃-CH₂-NCH₃- oder -O-Si(CH₃)₂-O-.

R⁷, R⁸ in den Formeln Ia und I b sind gleich oder verschieden und ausgewählt aus
- verzweigtes C₃-C₈-Alkyl, beispielsweise iso-Propyl, sec.-Butyl, tert.-Butyl, sec.-Pentyl, neo-Pentyl, 1,2-Dimethylpropyl, sec.-Hexyl oder sec.-Octyl; besonders bevorzugt iso-Propyl, sec.-Butyl und tert.-Butyl,
- C₃-C₁₂-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- α-substituiertes C₃-C₁₂-Alkenyl, besonders bevorzugt iso-Propenyl.

In einer besonderen Ausführungsform der vorliegenden Erfindung können R⁷ und Z⁴ in Formel I b miteinander unter Einbeziehung des Stamm-Phenylsystems einen 5- bis 10-gliedrigen Ring bilden. So können R⁷ und Z⁴ beispielsweise zusammen unter Einbeziehung des Stamm-Phenylsystems ein Benzo[b]phospholsystem bilden.

k in der Formel I a ist 0, 1, 2 oder 3 und ist bevorzugt 1 oder 2, besonders bevorzugt 1. Die Reste R⁵ und R⁶ können dabei gleich oder verschieden sein und sind bevorzugt gleich. Sind mehrere Reste R⁵ oder R⁶ vorhanden, so können auch die Reste R⁵, bzw. R⁶ untereinander verschieden sein. Besonders bevorzugte Verbrückungen CR⁵R⁶-(CR⁵R⁶)ₖ in Formel I a sind -CH₂-CH₂-, -C(CH₃)₂-C(CH₃)₂- und -CH₂-CH₂-CH₂-.

Die Herstellung der Übergangsmetallkomplexe der allgemeinen Formel I a und I b ist an sich bekannt. Geeignete Synthesen für Komplexe der allgemeinen Formel I a und b finden sich in DE-A 197 10 615 sowie in A. Döhring et al., *Organometallics* 2000, *19*, 388.

Als Aktivatoren, die Bestandteile der erfindungsgemäßen Katalysatorsysteme sind, dienen ausgewählte Aluminium- oder Bor-Verbindungen mit elektronenziehenden Resten (z.B. Trispentafluorphenylboran, Trispentafluorphenylaluminium, N,N-Dimethylanilinium-tetrakis-pentafluorphenylborat, Tri-n-butylammonium-tetrakis-pentafluorphenylborat, *N,N*-Dimethylanilinium-tetrakis-(3,5-bisperfluormethyl)-phenylborat, Tri-n-butylammonium-tetrakis-(3,5-bisperfluormethyl)-phenylborat sowie Tritylium-tetrakispentafluorphenylborat). Bevorzugt sind Dimethylanilinium-tetrakis-pentafluorphenylborat, Tritylium-tetrakispentafluorphenylborat sowie Trispentafluorphenylboran.

Eine andere geeignete Klasse von Aktivatoren sind Aluminoxane.

Die Struktur der Aluminoxane ist nicht genau bekannt. Es handelt sich bei ihnen um Produkte, die durch vorsichtige partielle Hydrolyse von Aluminiumalkylen erhalten werden (s. DE-A 30 07 725). Diese Produkte liegen nicht rein vor, sondern als Gemische von offenkettigen und cyclischen Strukturen des Typs II a und II b. Diese Gemische liegen vermutlich in einem dynamischen Gleichgewicht zueinander vor.

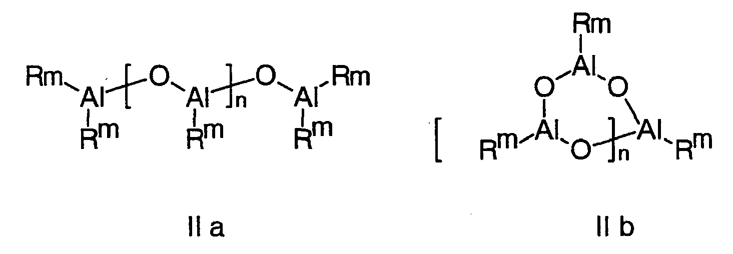

In Formel II a und II b sind die Reste R^{m} unabhängig voneinander
- C₁-C₁₂-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt ist Methyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₇- bis C₂₀-Aralkyl, bevorzugt C₇- bis C₁₂-Phenylalkyl wie Benzyl, 1-Phenethyl, 2-Phenethyl, 1-Phenyl-propyl, 2-Phenyl-propyl, 3-Phenyl-propyl, 1-Phenyl-butyl, 2-Phenyl-butyl, 3-Phenyl-butyl und 4-Phenyl-butyl, besonders bevorzugt Benzyl, oder
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl; und

- n: ist eine ganze Zahl von 0 bis 40, bevorzugt von 1 bis 25 und besonders bevorzugt von 2 bis 22.

In der Literatur werden auch käfigartige Strukturen für Aluminoxane diskutiert (Y. Koide, S.G. Bott, A.R. Barron *Organometallics* 1996, *15*, 2213-26; A.R. Barron *Macromol. Symp.* 1995, *97*, 15-25). Unabhängig davon, wie die Struktur der Aluminoxane tatsächlich aussieht, sind sie als Aktivatoren der Komplexe der allgemeinen Formeln I a und I b geeignet.

Gemische verschiedener Aluminoxane sind in den Fällen besonders bevorzugte Aktivatoren, in denen in einer Lösung eines Paraffins, beispielsweise n-Heptan oder Isododekan, polymerisiert wird. Eine besonders bevorzugtes Gemisch ist das kommerziell bei der Firma Witco GmbH erhältliche CoMAO mit einer Formel von [(CH₃)_{0,9}(iso-C₄H₉)_{0,1}AlO]ₙ.

Als Druck im erfindungsgemässen Verfahren kommen 10 bis 100 bar, bevorzugt 15 bis 80 bar und besonders bevorzugt 20 bis 75 bar in Frage. Bei geringeren Drücken ist der Katalysator oftmals zu wenig aktiv oder die Molmassen zu niedrig. Andererseits erniedrigt sich der Verweigungsgrad der Ethylenpolymerisate bei steigenden Druck. Überraschenderweise wurde für das erfindungsgemässe Verfahren gefunden, dass bei höheren Temperaturen, ein höherer Verzweigungsgrad erreicht wird. Die Reaktionstemperatur liegt daher in einem bereich von 40 bis 110°C, bevorzugt 50 bis 100°C, besonders bevorzugt sind 50 bis 80°C.

Die Polymerisation kann in bekannter Weise in Masse, in Suspension, in der Gasphase oder in einem überkritischen Medium in den üblichen, für die Polymerisation von Olefinen verwendeten Reaktoren durchgeführt werden. Sie kann diskontinuierlich oder bevorzugt kontinuierlich in einer oder mehreren Stufen erfolgen. Es kommen Lösungsverfahren, Suspensionsverfahren, gerührte Gasphasenverfahren oder Gasphasenwirbelschichtverfahren in Betracht. Als Lösungsmittel oder Suspensionsmittel können inerte Kohlenwasserstoffe, beispielsweise iso-Butan, oder aber die Monomeren selbst verwendet werden.

Damit die Komplexe der allgemeinen Formeln I a und I b in Suspensionsverfahren, Massepolymerisationsverfahren oder Gasphasenverfahren eingesetzt werden können, ist es vorteilhaft, sie auf einem festen Träger zu immobilisieren. Andernfalls kann es zu Morphologieproblemen des Polymers (Brocken, Wandbeläge, Verstopfungen in Leitungen oder Wärmetauschern) kommen, die zum Abschalten der Anlage zwingen.

Katalysatorsysteme aus Komplexen der allgemeinen Formeln I a und I b und Aktivator lassen sich gut auf einem festen Träger abscheiden. Als Trägermaterialien kommen z.B. poröse Metalloxide von Metallen der Gruppen 2-14 oder Mischungen derselben infrage, weiterhin Schichtsilikate, aber auch feste Halogenide von Metallen der Gruppen 1, 2 und 13 und Polymere wie beispielsweise Polyethylen oder Polypropylen. Bevorzugte Beispiele für Metalloxide der Gruppen 2-14 sind SiO₂, B₂O₃, Al₂O₃, MgO, CaO und ZnO. Bevorzugte Schichtsilikate sind Montmorrilonite oder Bentonite; bevorzugte Halogenide sind MgCl₂ oder amorphes AlF₃.

Besonders bevorzugte Trägermaterialien sind sphärische Kieselgele und Alumosilikatgele der allgemeinen Formel SiO₂·a Al₂O₃, wobei a allgemein für eine Zahl im Bereich von 0 bis 2 steht, bevorzugt 0 bis 0,5. Derartige Kieselgele sind im Handel erhältlich, z.B. Silica Gel 332, Sylopol® 948 oder Sylopol 952 oder S 2101 der Fa. W.R. Grace oder ES 70X der Firma Crosfield.

Als Partikelgröße des Trägermaterials haben sich mittlere Teilchendurchmesser von 1-300 µm bewährt, bevorzugt von 20 bis 80 µm, wobei der Teilchendurchmesser durch bekannte Methoden wie Siebmethoden bestimmt wird. Das Porenvolumen dieser Träger beträgt 1,0 bis 3,0 ml/g, bevorzugt von 1,6 bis 2,2 ml/g und besonders bevorzugt von 1,7 bis 1,9 ml/g. Die BET-Oberfläche beträgt 200 bis 750 m²/g, bevorzugt 250 bis 400 m²/g.

Um dem Trägermaterial anhaftende Verunreinigungen, insbesondere Feuchtigkeit, zu entfernen, können die Trägermaterialien vor der Dotierung ausgeheizt werden, wobei sich Temperaturen von 45 bis 1000°C eignen. Temperaturen von 100 bis 750°C sind für Kieselgele und andere Metalloxide besonders geeignet; für MgCl₂-Träger sind Temperaturbereiche von 50 bis 100°C bevorzugt. Dieses Ausheizen sollte über einen Zeitraum von 0,5 bis 24 Stunden erfolgen, wobei Ausheizzeiten von 1 bis 12 Stunden bevorzugt sind. Die Druckbedingungen sind an sich unkritisch; das Ausheizen kann bei Atmosphärendruck erfolgen. Vorteilhaft sind jedoch verminderte Drücke von 0,1 bis 500 mbar, besonders vorteilhaft ist ein Bereich von 1 bis 100 mbar und ganz besonders vorteilhaft ein Bereich von 2 bis 20 mbar. Auch eine chemische Vorbehandlung des Trägermaterials ist möglich.

Zur Dotierung des Katalysators verfährt man im Allgemeinen so, dass man das Trägermaterial in einem Suspensionsmittel aufschlämmt und diese Suspension mit der Lösung des Chrom-Komplexes und des Aktivators vereinigt. Dabei beträgt das Volumen des Suspensionsmittels das 1- bis 20-fache des Porenvolumens des Katalysatorträgers. Anschließend kann der Katalysator durch eine geeignete Methode vom Suspensionsmittel getrennt werden, wie filtrieren, zentrifugieren oder eindampfen.

Zur besseren Kontrolle der Morphologie kann man den Katalysator vor der eigentlichen Polymerisation mit geringen Mengen Monomer vorpolymerisieren. Die Vorpolymerisation kann man durch Dosierung eines reversiblen Katalysatorgiftes oder durch Beenden der Monomerdosierung abbrechen und anschließend den vorpolymerisierten Katalysator in die Polymerisationsanlage dosieren. Als Comonomere zur Vorpolymerisation sind α-Olefine geeignet, wie beispielsweise 0,1 bis 20 mol-% 1-Buten, 1-Penten, 1-Hexen, 4-Methyl-1-Penten, 1-Octen, 1-Decen oder 1-Undecen. Aber auch Isobuten ist ein geeignetes Comonomer.
as Katalysatorsystem kann weiterhin auch mit einer Verbindung der Formel (XI) umgesetzt werden

M(R^{A})ᵣ(R^{B})ₛ (R^{C})ₜ (XI)

in der
- M: ein Alkali-, ein Erdalkalimetall oder ein Metall der 13. Gruppe des Periodensystems, d.h. Bor, Aluminium, Gallium, Indium oder Thallium bedeutet,
- R^{A}: Wasserstoff, C₁-C₁₀ Alkyl, C₆-C₁₅-Aryl, Alkylaryl oder Arylalkyl mit jeweils 1 bis 10 C-Atom im Alkylrest und 6 bis 20 C-Atomen im Arylrest,
- R^{B} und R^{C}: Wasserstoff, Halogen, C₁-C₁₀- Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
- und:
- s und t: ganze Zahlen von 0 bis 2 bedeuten, wobei die Summe r+s+t der Wertigkeit von M entspricht.

Es wurde gefunden, dass durch die Zugabe der Verbindungen der Formel (XI) auf das Molekulargewicht der hochverzweigten Ethylenpolymerisate Einfluss genommen werden kann.

Von den Metallverbindungen der allgemeinen Formel (XI) sind diejenigen bevorzugt, in denen
- M: Lithium, Magnesium oder Aluminium bedeutet und
- R^{B} und R^{C}: für C₁-C₁₀-Alkyl stehen.

Besonders bevorzugte Metallverbindungen der Formel (XI) sind n Butyllithium, n-Butyl-n-octylmagnesium, n-Butyl-n-heptyl-magnesium, Tri-n-hexyl-aluminium, Tri-iso-butyl-aluminium, Triethylaluminium und Trimethylaluminium und Mischungen davon.

Wenn eine Verbindung der Formel (XI) eingesetzt wird, ist sie bevorzugt in einer solchen Menge im Katalysatorfeststoff enthalten, daß das molare Verhältnis von M aus Formel (XI) zu Cr aus Organoübergangsmetallverbindung der Formel I a oder I b von 800:1 bis 1:1, insbesondere von 200:1 bis 2:1, beträgt.

Um eine bei Polymerisationen mitunter zu beobachtende elektrostatische Aufladung der Polymerisationsanlage oder des Produkts zu vermeiden, kann man der Reaktionsmischung ein Antistatikum zusetzen. Geeignete Antistatika sind verdünnte Lösungen aliphatischer Alkohole, beispielsweise Isopropanol, in Paraffinen wie beispielsweise n-Heptan. Weitere geeignete Antistatika sind als Stadis®-Marken von der Firma DuPont kommerziell erhältlich.

Ein weiterer Gegenstand der vorliegenden Erfindung sind hochverzweigte Ethylenpolymerisate, erhältlich nach dem erfindungsgemäßen Verfahren. Dabei werden unter hochverzweigten Ethylenpolymerisaten solche Polymerisate verstanden, die mehr als 5 Methylgruppen pro 1000 C-Atomen aufweisen, bestimmt durch IR-Spektroskopie. Bevorzugt haben die erfindungsgemäßen Polymerisate mehr als 10 Methylgruppen/1000 C-Atome und besonders bevorzugt mehr als 20 Methylgruppen/1000 C-Atome. Die Molekulargewichtsverteilung Q, definiert als der Quotient auf den Molmassen Mw durch Mn, der erfindungsgemäßen Polymerisate ist im Bereich von 1,5 bis 10, bevorzugt von 1,8 bis 3,5 und besonders bevorzugt von 1,8 bis 2,5. Die Molmasse Mn der entstandenen hochverzweigten Ethylenpolymerisate liegt üblicherweise im Bereich von 10 000 bis 1 000 000, bevorzugt im Bereich von 15 000 bis 800 000 und besonders bevorzugt im Bereich von 20 000 bis 500 000.

Die erfindungsgemäßen Polymerisate eignen sich in hervorragender Weise zur Herstellung von Masterbatches zur Einfärbung von Kunststoffen. Ein weiterer Gegenstand der vorliegenden Erfindung ist die Verwendung der erfindungsgemäßen Polymerisate als Masterbatches zur Einfärbung von Kunststoffen.

Die erfindungsgemäßen Pigmentkonzentrate ("Masterbatche") enthalten die folgenden Komponenten:
A) Mindestens ein Farbstoffpigment, wobei die Farbstoffpigmente aus anorganischen oder organischen Farbstoffpigmenten ausgewählt werden.
   Beispiele für anorganische Pigmente sind
   - Zinkweiß, Zinksulfid, Lithopone, Bleiweiß, Bleisulfat, Kreide, Titandioxid;
   - Eisenoxidgelb, Cadmiumgelb, Nickeltitangelb, Chromtitangelb, Chromgelb, Bleichromat, Bismutvanadat, Neapelgelb oder Zinkgelb
   - Ultramarinblau, Kobaltblau, Manganblau, Eisenblau,
   - Ultramaringrün, Kobaltgrün, Chromoxid (Chromoxidgrün);
   - Ultramarinviolett, Kobaltviolett, Manganviolett;
   - Ultramarinrot, Molybdatrot, Chromrot, Cadmiumrot;
   - Eisenoxidbraun, Chromeisenbraun, Zinkeisenbraun, Mangantitanbraun;
   - Eisenoxidschwarz, Eisen-Mangan-Schwarz, Spinellschwarz, Ruß;
   - orangefarbene Spinelle und Korunde, Cadmiumorange, Chromorange, Bleimolybdat;
   - Aluminium oder Cu/Zn-Legierung;

   Beispiele für organische Pigmente sind
   - Metall-Phthalocyanine wie Phthalocyaninblau oder Phthalocyaningrün, weiterhin Perylenrot, Diarylgelb, Isoindolingelb, Chinophthalon-Pigmente, Chinacridon-Pigmente, Benzimidazolon-Pigmente, Malachitgrün, Thioindigo, Monoazopigmente, Disazopigmente, verlackte Azopigmente, Naphthol AS-Pigmente, Benzimidazolon-Pigmente, Diketopyrrolopyrrole, Indanthron, Azokondensations-Pigmente, Disazokondensations-Pigmente, Anthrachinon-Pigmente, Pyrazolone, Perinone, Aminoketon-Pigmente, Indigo oder Triphenylmethan-Pigmente.

   Übersichten über gängige anorganische und organische Pigmente finden sich beispielsweise in K. Leissler und G. Rösch, *Kunststoffe* 1996, *86*, 965 sowie in *Ullmann's Enyclopädie der technischen Chemie,* 4. Auflage, Stichworte: Pigmente: Einleitung; Bd. 18, S. 547 ff., Organische Pigmente, Bd. 18, S. 661 ff; Thieme Verlag Stuttgart, 1977. Es können Konzentrate mit einem Pigment, aber auch Abmischungen mit zwei, drei oder mehr verschiedenen Pigmenten hergestellt werden.
B) das nach dem erfindungsgemäßen Verfahren erhältliche hochverzweigte Ethylenpolymerisat;
C) optional einen thermoplastischen Kunststoff als Trägerpolymer, wobei es sich bei diesem Kunststoff beispielsweise um Polyethylen, Polypropylen, Polystyrol, Polyoxymethylen, Polystyrol-Copolymere wie Styrol-Butadiencopolymere, AcrylnitrilButadien-Styrol-Terpolymere oder Polyvinylchlorid sowie Copolymerisate von Ethylen mit 0,1 bis 20 mol-% 1-Buten, 1-Penten, 4-Methyl-1-Penten,1-Hexen, 1-Octen, 1-Decen oder 1-Undecen handelt;
D) optional 0 bis 10 Gew.-% Zuschlagstoffe, bezogen auf die Gesamtmasse des Pigmentkonzentrats, wie Antioxidantien; bevorzugt sind Antioxidantien wie beispielsweise sterisch gehinderte Phenole oder sterisch gehinderte Amine "HALS"; ganz besonders bevorzugt sind sterisch gehinderte Phenole der Irganox® -Marken der Firma Ciba.

Die Mengenverhältnisse der verschiedenen Komponenten lassen sich in weiten Grenzen variieren. Dabei werden die Mengenverhältnisse so aneinander angepasst, dass sie sich insgesamt zu 100 Gew.-% addieren.
- Das Pigment oder die Pigmente werden in Mindestmengen von 1 Gew.-% verwendet, bevorzugt 5 Gew.-% und besonders bevorzugt 10 Gew.-%. In geringeren Anteilen wird im Allgemeinen keine ausreichende Farbstärke erzielt. Als Obergrenze sind 60 Gew.-% zu nennen, bevorzugt sind 45 Gew.-%, weil die Pigmente der teuerste Bestandteil der Pigmentkonzentrate sind.
- Das Wachs wird in Trägerpolymer-haltigen Pigmentkonzentraten zu mindestens 1 Gew.-% verwendet, bevorzugt sind mindestens 2 Gew.-%, weil unterhalb dieses Gewichtsanteils keine ausreichende Benetzung von Pigment und Trägerpolymer gewährleistet ist. In Pigmentkonzentraten, die ein Trägerpolymer enthalten, werden als Maximum vorzugsweise 30 Gew.-% Wachs verwendet und besonders bevorzugt 20 Gew.-%, weil durch zu hohe Wachsmengen im Endprodukt die mechanischen Eigenschaften des einzufärbenden Kunststoffformkörpers oder Flächengebildes leiden können. Als Obergrenze ist in solchen Pigmentkonzentraten 90 Gew.-% sinnvoll, die ohne Verwendung des Trägerpolymers hergestellt werden sollen. Als Minimum für den Wachsanteil eines Trägerpolymer-freien Pigmentkonzentrats sind 40 Gew.-% zu nennen, weil andernfalls das Konzentrat zu teuer wird.
- Trägerpolymere werden optional zugegeben. In den Fällen, in denen Trägerpolymer verwendet wird, wird es einem Anteil von mindestens 30 Gew.-% verwendet, weil dadurch das spätere Untermischen des Pigmentkonzentrats bei der Herstellung der Kunststoffformkörper und Kunststoffflächengebilde erleichtert wird. Als sinnvolle Obergrenze ist 80 Gew.-% anzugeben.
- Zuschlagstoffe werden nur optional und dann in geringen Mengen zugegeben. Eine sinnvolle Untergrenze für Antioxidantien wie Irganox ist 0,1 Gew.-%, weil unterhalb dieser Menge kein signifikanter Oxidationsschutz mehr möglich ist; bevorzugt sind 0,5 Gew.-% und besonders bevorzugt ist 1 Gew.-%. Als Obergrenze sind 5 Gew.-% zu nennen, weil andernfalls die Verarbeitungseigenschaften des Pigments durch die niedermolekulare Komponente sichtbar beeinträchtigt werden; bevorzugt sind 2 Gew.-% und besonders bevorzugt ist 1,5 Gew.-%. Eine weitere Klasse von Zuschlagsstoffen sind Bleisalze wie beispielsweise basisches Bleisulfat oder Bleistearat oder Mischungen derselben, die in Anteilen von jeweils 0,5 bis 2 Gew.-%, bevorzugt 1,0 bis 1,5 Gew.-% zugegeben werden.

Die mit Hilfe eines Komplexes der allgemeinen Formel I a oder I b nach einem der genannten Polymerisationsverfahren erhaltenen Polyolefinwachse lassen sich durch verschiedene Methoden zu Masterbatchen weiterverarbeiten, denen gemeinsam ist, dass Wachs und Trägerpolymer im entscheidenden Schritt aufgeschmolzen werden, das Pigment aber nicht, und das oder die Pigmente sowie optional Zuschlagsstoffe eingearbeitet werden.

Vor der eigentlichen Mischung können die Komponenten optional vorgemischt werden, wozu sich Trommel- oder Taumelmischer besonders eignen. Auch Mikronisierungen können optional durchgeführt werden.

Bei der eigentlichen Mischung unterscheidet man diskontinuierliche und kontinuierliche Verfahren. Für diskontinuierliche Verfahren lassen sich einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen.

Anschließend werden die Pigmentkonzentrate in üblicher Weise granuliert. Dazu lassen sich Stranggranulatoren verwenden, bei denen das Gemisch als Strang unter Wasser abgekühlt werden und dann entweder noch im oder aber nach Verlassen des Wasserbades zu Pellets oder Granulat geschnitten wird. Weiterhin sind Lochplatten als Schneidemittel geeignet ("Heißabschlagverfahren").

Zur Herstellung der Formkörper und Flächengebilde geht man so vor, dass man zunächst ein Gemisch aus
- 0,01 bis 10 Gew.-% Pigmentkonzentrat, bevorzugt 0,5 bis 5 Gew.-% Pigmentkonzentrat und besonders bevorzugt 0,5 bis 2,5 Gew.-% Pigmentkonzentrat, mit
- 90 bis 99,99 Gew.-% einzufärbendes Polymer, bevorzugt 95 bis 99,5 und besonders bevorzugt 97,5 bis 98,5 Gew.-% Polymer sowie optional
- 0 bis 5 Gew.-% Zuschlagstoffen, wobei Antioxidantien oder Biozide bevorzugte Zuschlagstoffe sind, herstellt.

Als einzufärbendes Polymer sind geeignet: Polyethylen, Polypropylen, Polystyrol, Polyoxymethylen, Polyethylenterephthalat, Polybutylenterephthalat, Polymethylmethacrylat, Polyethersulfone, Polysulfone, Polyetherketone,Polystyrol-Copolymere, AcrylnitrilButadien-Styrol-Terpolymere, Polyamide wie Nylon-6 oder Nylon-6,6, thermoplastische Polyurethane,
Polyvinylchlorid sowie Copolymerisate von Ethylen mit 0,1-20 mol-% 1-Buten, 1-Penten, 1-Hexen, 4-Methyl-1-Penten, 1-Octen, 1-Decen oder 1-Undecen. Dabei können das einzufärbende Polymer und das Trägerpolymer des Masterbatches gleich sein, müssen aber nicht.

Zum Mischen der Pigmentkonzentrate mit den Polymeren sowie optional den Zuschlagstoffen lassen sich prinzipiell die gleichen Verfahren einsetzen wie zur Herstellung des Masterbatchs selber. Für diskontinuierliche Verfahren lassen sich wiederum einfache Kneter verwenden; kontinuierliche Verfahren lassen sich beispielsweise in Schnellmischern, Einschneckenextrudern, Zweischneckenextrudern, Buss-Knetern, Planetwalzenextrudern, offenen Doppelmuldenknetern oder Schnellrührern ausführen. Dabei sind kontinuierliche Verfahren bevorzugt.

Die Herstellung der Formkörper und Flächengebilde kann durch Spritzgießen, Folienextrusion oder Gießen bei Temperaturen oberhalb des Schmelzpunkts des Polymers erfolgen. Die Verarbeitungseigenschaften der erfindungsgemäßen Formkörper und Flächengebilde werden durch den Einsatz der erfindungsgemäßen Pigmentkonzentrate nicht unvorteilhaft beeinflusst.

Die nach dem erfindungsgemäßen Verfahren erhaltenen Formkörper und Flächengebilde unterscheiden sich von den im Handel erhältlichen Formkörpern und Flächengebilden durch eine deutlich höhere Brillanz in der Farbe. Die mechanischen Eigenschaften der Werkstoffe werden durch den Einsatz der erfindungsgemäßen Pigmentkonzentrate nicht unvorteilhaft beeinflusst.

Die vorliegende Erfindung wird durch die folgenden Arbeitsbeispiele erläutert:
Allgemeines

Die Polymerisationsexperimente wurden in einem 1-Liter-Vierhalskolben durchgeführt, der mit Kontaktthermometer, Rührer mit Teflon-Blatt, Heizpilz und Gaseinleitungsrohr ausgerüstet war (drucklose Versuche), bzw. in einem 10-Liter-Stahlautoklav der Fa. Büchi mit automatischer Gassteuerung, Temperaturkontrolle und Rührer (Versuche unter Druck).

Das als Lösemittel verwendete Toluol wurde über Na/Benzophenon destilliert.

Als Methylaluminoxan-Lösung ("MAO") wurde eine kommerziell erhältliche 1,6-molare toluolische Lösung der Fa. Witco GmbH verwendet.

Der Komplex wurde nach Literaturangaben synthetisiert (DE-A 197 10 615).

### Durchführung der drucklosen Polymerisationsversuche

In einem 1-Liter-Vierhalskolben durchgeführt, der mit Kontaktthermometer, Rührer mit Teflon-Blatt, Heizpilz und Gaseinleitungsrohr ausgerüstet war, wurden 5 bis 20 µmol des Komplexes der Formel I a1 in 250 ml Toluol vorgelegt und auf die gewünschte Reaktionstemperatur erhitzt. 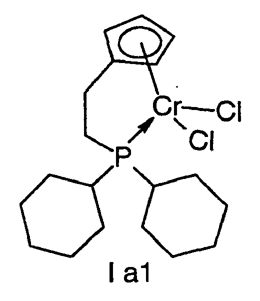 Anschließend wurde die angegebene Menge MAO (Methylaluminoxan) zugegeben und 20 bis 40 1/h Ethylen durchgeleitet. Die Reaktionstemperatur wurde durch Kühlung konstant gehalten.

Die Reaktion wurde durch Zugabe eines Gemisches aus 15 ml konzentrierter wässriger HCl und 50 ml Methanol abgebrochen und 15 Minuten gerührt. Anschließend wurden weitere 250 ml Methanol zugegeben, wobei das Produkt ausfiel und weitere 15 Minuten gerührt. Das Produkt wurde abfiltriert, dreimal mit Methanol gewaschen und bei 70°C bis zur Gewichtskonstanz getrocknet. Die Ergebnisse finden sich in den Tabellen 1 und 2.

**Tabelle 1 Polymerisationsergebnisse**

| Versuch Nr. | Komplex [mg;mmol] | MAO [mmol] | Al : Cr | T_{poly} [°C] | t_{poly} [min] | Ausbeute PE [g] | Aktivität [kg PE/mol Cr.h] |
|---|---|---|---|---|---|---|---|
| 1 | 10,6; 25,7 | 12,9 | 500 | 40 | 30 | 24,2 | 1880 |
| 2 | 8,0; 19,4 | 9,7 | 500 | 60 | 60 | 14,4 | 740 |

| | | | | | | | |
|---|---|---|---|---|---|---|---|
| Verwendete Abkürzungen: PE: Polyethylen, t: Zeit, Q = M_{w}/Mₙ | | | | | | | |

**Tabelle 2: Polymeranalytik**

| Versuch Nr. | Dichte [kg/m³] | η [dl/g] | M_{w} [g/mol] | Mₙ [g/mol] | Q | Schmp [°C] | CH₃ [#/1000 C] |
|---|---|---|---|---|---|---|---|
| 1 | 920,8 | 1,08 | 59354 | 21392 | 2,17 | 112,1 | 21 |
| 2 | 907,7 | 0,56 | 23925 | 9560 | 2,49 | 105,1 | 24 |

### Trägerung des Komplexes I a1

In einem inertisierten 250-ml-Vierhalskolben mit Teflonrührer wurden 3,8 g Kieselgel ES 70X der Fa. Crosfield (12 Stunden ausgeheizt bei 130°C) vorgelegt.

In einem 100-ml-Erlenmeyerkolben wurden 109,7 mg (266 µmol) Komplex I a1 in 7,2 ml toluolischer MAO-Lösung (30 Gew.-% der Fa. Witco) 15 Minuten lang gerührt, bis eine homogene dunkelviolette Lösung entstanden war. Diese Lösung wurde tropfenweise und unter Rühren zum Kieselgel dosiert. Die entstandene Suspension wurde 1 Stunde bei Zimmertemperatur gerührt und anschließend im Vakuum getrocknet, bis ein frei fließendes Pulver entstanden war.
Ausbeute: 7,0 g eines hellvioletten Pulvers.

Polymerisation mit dem geträgerten Komplex I a1

In einem 10-1-Stahlautoklaven mit Rührer wurde zunächst 40 bzw. 80 mg (s. Tabelle) BoMag-Lösung (0,12 mol/l Butyloctylmagnesium, kommerziell erhältlich von der Fa. Witco GmbH) vorgelegt. Anschließend wurde 400 ml flüssiges Isobutan eingefüllt und unter Rühren auf die angegebene Temperatur erhitzt. Anschließend wurde die abgewogene Menge Katalysator in wenigen (5-10) ml Heptan suspendiert und über eine Schleuse eingeschossen. Der gewünschte Ethylendruck wurde eingestellt und unter weiterem Rühren wurde die angegebene Zeit polymerisiert. Die Polymerisation wurde durch Entspannen abgebrochen und das Polymer im Vakuum getrocknet.

**Tabelle 3 Polymerisationsergebnisse mit Trägerkatalysator**

| Versuch Nr. | Katalysator [mg] | BOMag [mg] | T_{poly} [°C] | p [bar] | t_{poly} [min] | Ausbeute PE [g] | Produktivität [g PE/g Kat.] |
|---|---|---|---|---|---|---|---|
| 3 | 180 | 40 | 60 | 40 | 60 | 38 | 210 |
| 4 | 156 | 40 | 70 | 40 | 60 | 40 | 260 |
| 5 | 160 | 40 | 90 | 40 | 60 | 20 | 125 |
| 6 | 169 | 40 | 70 | 30 | 60 | 23 | 140 |
| 7 | 218 | 80 | 70 | 40 | 60 | 59 | 270 |
| 8 | 182 | 80 | 70 | 40 | 60 | 48 | 260 |
| 9 | 224 | 80 | 90 | 40 | 60 | 30 | 130 |
| 10 | 250 | 80 | 70 | 30 | 60 | 31 | 120 |
| 11 | 314 | 80 | 70 | 13 | 45 | Nur anpolymerisiert | |

**Tabelle 4: Polymeranalytik**

| Versuch Nr. | Dichte [kg/m³] | η [dl/g] | Schmp. [°C] | Summe CH₃ [#/1000 C] | trans-CH=CH-CH₃ [#/1000 C] | -CH=CH₂ [#/1000 C] | Vinyliden [#/1000 C] |
|---|---|---|---|---|---|---|---|
| 3 | 929,6 | 9,19 | 128,1 | 6,9 | 0,04 | 0,36 | 0,04 |
| 4 | 923,1 | > 50 | 127,9 | 5,5 | 0,01 | 0,37 | 0,01 |
| 5 | 918,7 | 14,21 | 124,3 | 11,0 | 0,03 | 0,44 | 0,01 |
| 6 | 927,5 | > 50 | 125,4 | 7,0 | 0,01 | 0,35 | 0,02 |
| 7 | 928,2 | 4,31 | 129,3 | 9,2 | 0,04 | 0,31 | < 0,01 |
| 8 | 929,7 | 35,87 | 126,5 | 8,4 | 0,05 | 0,34 | < 0,01 |
| 9 | 911,9 | 1,93 | 139,0 | 18,3 | 0,19 | 1,26 | 0,1 |
| 10 | 923,6 | 16,47 | n.b. | 9,8 | 0,01 | 0,35 | 0,1 |

## Patentansprüche

1. Verfahren zur Herstellung von hochverzweigten Ethylenpolymerisaten, **dadurch gekennzeichnet, dass** man Ethylen mit einem Katalysatorsystem polymerisiert, das eine Verbindung der Formel I a oder I b 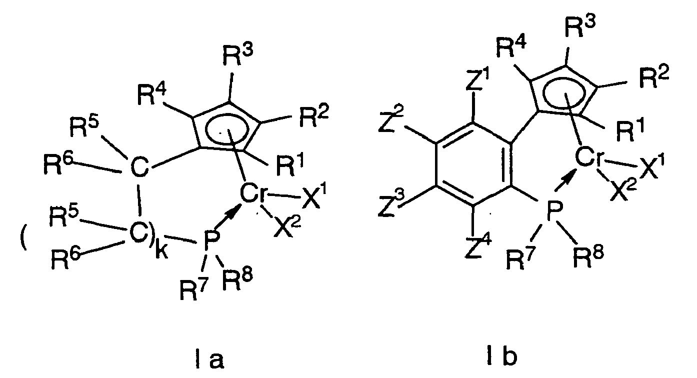 und einen Aktivator enthält, wobei die Variablen in den Formeln I a und I b wie folgt definiert sind:
X¹,X² sind gleich oder verschieden und ausgewählt aus Halogenid,Trifluoracetat, BF₄-, PF₆- oder SbF₆-, C₁-C₈-Alkyl, C₇- bis C₁₃-Aralkyl, C₆-C₁₄-Aryl, C₁-C₆-Alkoxy oder NR⁹R¹⁰, wobei R⁹ und R¹⁰ unabhängig voneinander aus Wasserstoff, C₁-C₈-Alkyl, C₂-C₁₂-Alkenyl und C₆-C₁₄-Aryl ausgewählt sind, die einen gesättigten oder ungesättigten 5- bis 10-gliedrigen Ring bilden können;
R¹ bis R⁶ sind gleich oder verschieden und ausgewählt aus Wasserstoff, C₁-C₈-Alkyl, substituiert oder unsubstituiert, C₃-C₁₂-Cycloalkyl, substituiert oder unsubstituiert, C₂-C₁₂-Alkenyl, C₇-C₁₃-Aralkyl, C₆-C₁₄-Aryl, unsubstituiert oder einfach oder mehrfach gleich oder verschieden substituiert mit
C₁-C₈-Alkyl, substituiert oder unsubstituiert, C₃-C₁₂-Cycloalkyl, C₇-C₁₃-Aralkyl, C₆-C₁₄-Aryl, Halogen, C₁-C₆-Alkoxy, C₆-C₁₄-Aryloxy, SiR¹¹R¹²R¹³ oder O-SiR¹¹R¹²R¹³, wobei R¹¹ bis R¹³ ausgewählt werden aus C₁-C₈-Alkyl, C₃-C₁₂-Cycloalkyl, C₇-C₁₃-Aralkyl oder C₆-C₁₄-Aryl;
k 0,1,2 oder 3,
Z¹ bis Z⁴ sind gleich oder verschieden und ausgewählt aus Wasserstoff, C₁-C₈-Alkyl, substituiert oder unsubstituiert, C₃-C₁₂-Cycloalkyl, substituiert oder unsubstituiert, C₂-C₁₂-Alkenyl, Halogen, NO₂ C₇-C₁₃-Aralkyl oder C₆-C₁₄-Aryl,
R⁷, R⁸ sind gleich oder verschieden und ausgewählt aus verzweigtes C₃-C₈-Alkyl, C₃-C₁₂-Cycloalkyl, α-substituiertes C₃-C₁₂-Alkenyl,
und wobei das Verfahren bei einer Temperatur von 40 bis 110°C und einem Druck von 10 bis 100 bar durchgeführt wird.

2. Verfahren nach Anspruch 1, **dadurch gekennzeichnet, dass** die Variablen in Formel I a wie folgt definiert sind:
X¹, X² ausgewählt aus Halogen oder BF₄-,
R¹-R⁶ gleich oder verschieden und ausgewählt aus Wasserstoff,
C₁-C₈-Alkyl oder
C₆-C₁₄-Aryl,
R⁷, R⁸ sind gleich und ausgewählt aus iso-Propyl, Cyclopentyl und -Cyclohexyl.

3. Verfahren nach den Ansprüchen 1 und 2, **dadurch gekennzeichnet, dass** die Variablen wie folgt definiert sind:
X¹, X² Chlor
R⁷, R⁸ Cyclohexyl.

4. Verfahren nach den Ansprüchen 1 bis 3, **dadurch gekennzeichnet, dass** man das Katalysatorsystem vor der Polymerisation auf einem festen Trägermaterial immobilisiert.

5. Verfahren nach den Ansprüchen 1 bis 4, **dadurch gekennzeichnet, dass** man das Katalysatorsystem mit einer Verbindung der Formel (XI) umsetzt,
M(R^{A})ᵣ(R^{B})ₛ (R^{C})ₜ (XI)
in der
M ein Alkali-, ein Erdalkalimetall oder ein Metall der 13. Gruppe des Periodensystems,
R^{A} Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
R^{B} und R^{C} Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
r eine ganze Zahl von 1 bis 3
und
s und t ganze Zahlen von 0 bis 2 bedeuten, wobei die Summe r+s+t der Wertigkeit von M entapricht,

6. Verwendung von hochverzweigten Ethylenpolymerisaten gemäß den Ansprüchen 1 bis 5 zur Herstellung von Masterbatches zur Einfärbung von Polymeren.

## Claims

1. A process for preparing highly branched ethylene polymers, which comprises polymerizing ethylene over a catalyst system comprising a compound of the formula I a or I b 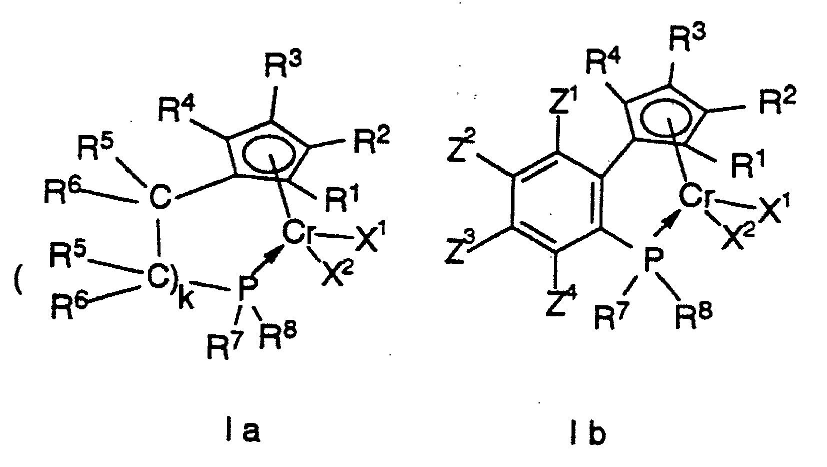 and an activator, where the variables in the formulae I a and I b are defined as follows:
X¹, X² are identical or different and are selected from among halide, trifluoroacetate, BF₄⁻, PF₆⁻ or SbF₆⁻, C₁-C₈-alkyl, C₇-C₁₃-aralkyl, C₆-C₁₄₋aryl, C₁-C₆-alkoxy and NR⁹R¹⁰, where R⁹ and R¹⁰ are selected independently from among hydrogen, C₁-C₈-alkyl, C₂-C₁₂-alkenyl and C₆-C₁₄-aryl, which may form a saturated or unsaturated 5- to 10-membered ring;
R¹ to R⁶ are identical or different and are selected from among hydrogen, C₁-C₈-alkyl, substituted or unsubstituted, C₃-C₁₂₋cycloalkyl, substituted or unsubstituted, C₂-C₁₂-alkenyl, C₇-C₁₃-aralkyl,
C₆-C₁₄-aryl, unsubstituted or substituted by one or more identical or different substitutents selected from among C₁-C₈-alkyl, substituted or unsubstituted, C₃-C₁₂₋cycloalkyl, C₇-C₁₃-aralkyl, C₆-C₁₄-aryl, halogen, C₁-C₆-alkoxy, C₆-C₁₄-aryloxy, SiR¹¹R¹²R¹³ and O-SiR¹¹R¹²R¹³, where R¹¹ to R¹³ are selected from among C₁-C₈-alkyl, C₃-C₁₂₋cycloalkyl, C₇-C₁₃-aralkyl or C₆-C₁₄-aryl
k is 0, 1, 2 or 3,
Z¹ to Z⁴ are identical or different and are selected from among hydrogen, C₁-C₈₋alkyl, substituted or unsubstituted, C₃-C₁₂₋cycloalkyl, substituted or unsubstituted, C₂-C₁₂-alkenyl, halogen, NO₂, C₇-C₁₃-aralkyl and C₆-C₁₄-aryl, and
R⁷,R⁸ are identical or different and are selected from among branched C₃-C₈-alkyl, C₃-C₁₂₋cycloalkyl, α-substituted C₃-C₁₂-alkenyl,
and the process is carried out at from 40 to 110°C and a pressure of from 10 to 100 bar.

2. The process according to claim 1, wherein the variables in formula I a are defined as follows:
X¹, X² are selected from among halogen and BF₄⁻,
R¹-R⁶ are identical or different and are selected from among hydrogen,
C₁-C₈-alkyl and
C₆-C₁₄-aryl ,
R⁷, R⁸ are identical and are selected from among isopropyl, cyclopentyl and cyclohexyl.

3. The process according to claim 1 or 2, wherein the variables are defined as follows:
X¹, X² are each chlorine,
R⁷, R⁸ are each cyclohexyl.

4. The process according to any of claims 1 to 3, wherein the catalyst system is immobilized on a solid support material prior to the polymerization.

5. The process according to any of claims 1 to 4, wherein the catalyst system is reacted with a compound of the formula (XI),
M (R^{A})ᵣ (R^{B})ₛ (R^{C})ₜ (XI)
where
M is an alkali metal, an alkaline earth metal or a metal of group 13 of the Periodic Table,
R^{A} is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
R^{B} and R^{C} are each hydrogen, halogen, C₁-C₁₀-alkyl, C₆-C₁₅-aryl, alkylaryl, arylalkyl or alkoxy each having from 1 to 10 carbon atoms in the alkyl part and from 6 to 20 carbon atoms in the aryl part,
r is an integer from 1 to 3
and
s and t are integers from 0 to 2, where the sum r+s+t corresponds to the valence of M.

6. The use of a highly branched ethylene polymer according to any of claims 1 to 5 for producing masterbatches for coloring polymers.

## Revendications

1. Procédé de préparation de polymères d'éthylène hautement ramifiés, **caractérisé en ce qu'**on polymérise de l'éthylène avec un système de catalyseur, qui contient un composé de formule Ia ou Ib 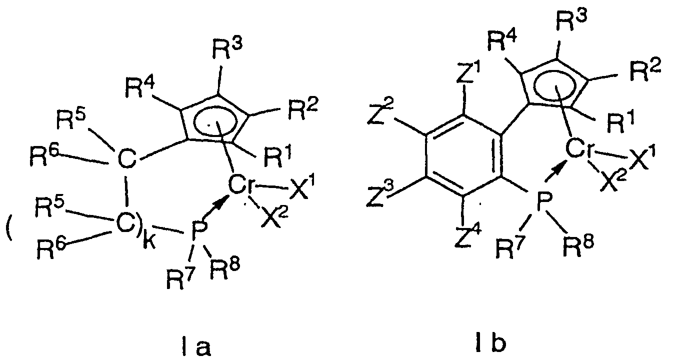 et un activateur, les variables dans les formules Ia et Ib étant définies comme suit:
X¹,X² sont identiques ou différents et choisis parmi halogénure, trifluoroacétate, BF₄-, PF₆- ou SbF₆-, alkyle en C₁ à C₈, aralkyle en C₇ à C₁₃, aryle en C₆ à C₁₄, alcoxy en C₁ à C₆ ou NR⁹R¹⁰, R⁹ et R¹⁰ étant choisis indépendamment l'un de l'autre parmi hydrogène, alkyle en C₁ à C₈, alcényle en C₂ à C₁₂ et aryle en C₆ à C₁₄, qui peuvent former un cycle saturé ou insaturé de 5 à 10 chaînons;
R¹ à R⁶ sont identiques ou différents et choisis parmi hydrogène, alkyle en C₁ à C₈, substitué ou non substitué, cycloalkyle en C₃ à C₁₂, substitué ou non substitué, alcényle en C₂ à C₁₂, aralkyle en C₇ à C₁₃, aryle en C₆ à C₁₄, non substitué ou monosubstitué ou polysubstitué, de manière identique ou différente, par alkyle en C₁ à Ce, substitué ou non substitué, cycloalkyle en C₃ à C₁₂, aralkyle en C₇ à C₁₃, aryle en C₆ à C₁₄, halogène, alcoxy en C₁ à C₆, aryloxy en C₆ à C₁₄, SiR¹¹R¹²R¹³ ou O-SiR¹¹R¹²R¹³, R¹¹ à R¹³ étant choisis parmi alkyle en C₁ à C₈, cycloalkyle en C₃ à C₁₂, aralkyle en C₇ à C₁₃ ou aryle en C₆ à C₁₄;
k vaut 0, 1, 2 ou 3,
Z¹ à Z⁴ sont identiques ou différents et choisis parmi hydrogène, alkyle en C₁ à C₈, substitué ou non substitué, cycloalkyle en C₃ à C₁₂, substitué ou non substitué, alcényle en C₂ à C₁₂, halogène, NO₂, aralkyle en C₇ à C₁₃ ou aryle en C₆ à C₁₄,
R⁷, R⁸ sont identiques ou différents et choisis parmi alkyle en C₃ à Ce ramifié, cycloalkyle en C₃ à C₁₂, alcényle en C₃ à C₁₂ substitué en α,
et le procédé étant réalisé à une température de 40 à 110°C et une pression de 10 à 100 bars.

2. Procédé selon la revendication 1, **caractérisé en ce que** les variables dans la formule la sont définies comme suit:
X¹, X² sont choisis parmi halogène ou BF₄-,
R¹ à R⁶ sont identiques ou différents et choisis parmi hydrogène,
alkyle en C₁ à C₈ ou
aryle en C₆ à C₁₄,
R⁷, R⁸ sont identiques et choisis parmi iso-propyle, cyclopentyle et cyclohexyle.

3. Procédé selon les revendications 1 et 2,
**caractérisé en ce que** les variables sont définies comme suit:
X¹, X² représentent chlore
R⁷, R⁸ représentent cyclohexyle.

4. Procédé selon les revendications 1 à 3, **caractérisé en ce qu'**on immobilise le système de catalyseur avant la polymérisation sur un matériau support solide.

5. Procédé selon les revendications 1 à 4, **caractérisé en ce qu'**on transforme le système de catalyseur avec un composé de formule (XI),
M (R^{A})ᵣ (RB)ₛ (R^{C})ₜ (XI)
dans laquelle
M représente un métal alcalin, un métal alcalino-terreux ou un métal du 13ème groupe du système périodique,
R^{A} représente hydrogène, alkyle en C₁ à C₁₀, aryle en C₆ à C₁₅, alkylaryle ou arylalkyle comprenant à chaque fois 1 à 10 atomes de carbone dans le radical alkyle et 6 à 20 atomes de carbone dans la radical aryle,
R^{B} et R^{C} représentent hydrogène, halogène, alkyle en C₁ à C₁₀, aryle en C₆ à C₁₅, alkylaryle, arylalkyle ou alcoxy comprenant à chaque fois 1 à 10 atomes de carbone dans la radical alkyle et 6 à 20 atomes de carbone dans le radical aryle,
r vaut un nombre entier de 1 à 3 et
s et t signifient des nombres entiers de 0 à 2, la somme r+s+t correspondant à la valence de M.

6. Utilisation de polymères d'éthylène hautement ramifiés selon les revendications 1 à 5 pour la préparation de lots-maîtres pour la teinture de polymères.
